# EUROPEAN PATENT APPLICATION

(11) **EP 1 515 465 A1**
(43) Date of publication of application: **16.03.2005**
(21) Application number: 03020812.8
(22) Date of filing: 12.09.2003
(51) Int. Cl.: H04H 1/00, H04N 7/24

(54) **Digital broadcast system**

(71) Applicant: Sony NetServices GmbH, 5081 Anif (AT)
(72) Inventor: Danzl, Christof, 5081 Anif (AT); Tripp, Markus, 5081 Anif (AT)
(74) Representative: Görz, Ingo

(57) **Abstract**

In a digital broadcast system single application data files are merged to at least one respective combined application data file that is supplied to the data carousel for transmission instead the two or more single merged application data files included within one respective combined application data file.

## Description

The present invention relates to a digital broadcast system in which application data files are transmitted via a data carousel, an application for a set-top box or another receiver for a digital broadcast system in which application data files are transmitted via a data carousel, a method to transmit application data files via a data carousel of a digital broadcast system, and a method to receive application data files that are transmitted via a data carousel of a digital broadcast system.

Digital broadcast systems applicable to the present invention are in particular ITV (Interactive TV) or DTV (Digital TV) systems (in the following just referred to as ITV), such as DVB/MHP (Digital Video Broadcast / Multimedia Home Platform) systems as e.g. specified in
[1] ETSI TS 101 812 V1.2.1 Multimedia Home Platform (MHP) Specification 1.0.2,
which is included into this specification by reference.

Generally, a MHP application (e.g. a Xlet, i.e. a Java application that is compliant to the MHP standard and can be executed on MHP set-top boxes, wherein the application is displayed on a normal TV screen) consists of many different components, e.g.:
- The application itself (Java classes),
- images and icons,
- configuration files,
- downloadable fonts, and
- content files, i.e. text that is displayed in text boxes on the screen.

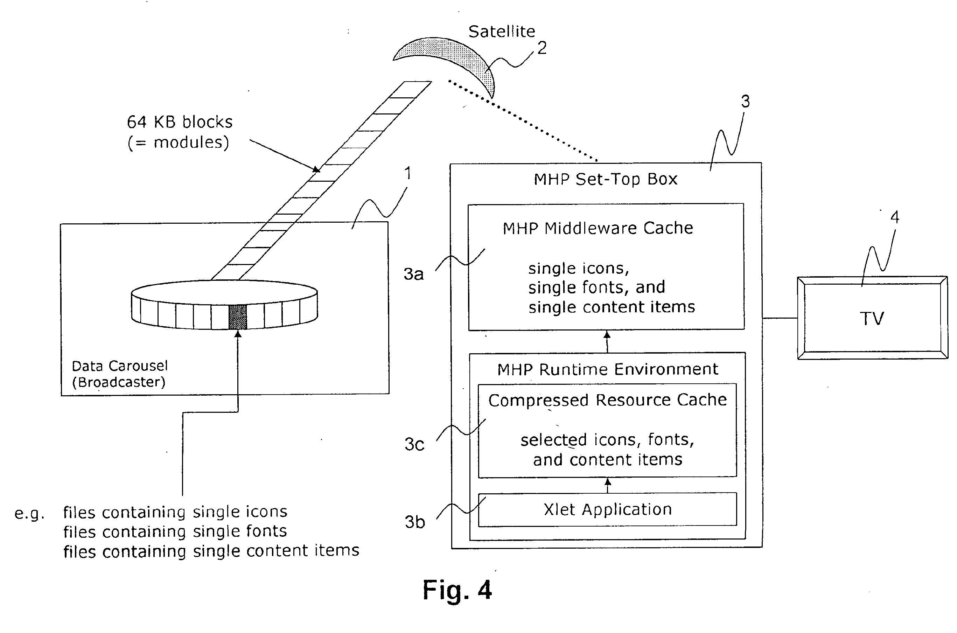

Figure 4 shows the usual flow of resources from the data carousel 1 of a broadcaster to the MHP set-top box 3 via a satellite 2. The set-top box 3 caches the resources and executes the application that is displayed on the TV screen 4. The resources are transmitted as single files, e.g. files each containing one icon, files each containing one font, files each containing a content item, ... .

The data carousel 1 organizes the files in blocks, e.g. in DVB/MHP with a size of 64 KB. These blocks are called modules. If a file is smaller than 64 KB the whole file is added to one module where it fits in. One file cannot be spread over several modules. In case a file is bigger than 64 KB it is kept in a separate module that is as big as the file. The broadcast system transmits the modules e.g. via the satellite 2 to the set-top box 3.

A middleware, e.g. a MHP middleware, within the set-top box 3 caches some of the modules locally. It is possible to group and prioritize the modules at the broadcast side, but most likely the broadcast configuration cannot be influenced by an application or an application programmer.

Originally if an application 3b requires additional resources e.g. icons, images, fonts, content files to display a page it requests the middleware to provide access to these files. If the middleware already stored the module containing the file in its local cache 3a the resource is available immediately. But if the middleware did not store the module containing the resource it has to wait until the module is transmitted the next time. This results in a very unpredictable behaviour of the application 3b, because the page switch takes noticeable longer when at least one resource is not available in the middleware cache 3a.

There are several ways to improve this situation: 1. The modules might be optimized at the broadcast system. However, this is rarely possible and most likely the data carousel 1 is configured using the default settings. 2. All resource files might be loaded in a local application cache 3c at application start-up. However, the memory available for the runtime environment, i.e. the application cache 3c and the applications 3b, is even smaller than the memory available for the middleware cache 3a. therefore, it is not possible to load all resources into the application memory 3c for bigger portals. Further this strategy would increase start-up time significantly.

Therefore, the broadcast environment, in particular the MHP environment, has some characteristics that makes it different to normal PC based Java applications or Java applets, in particular that:
- Files (resources) are loaded from a data carousel. The data carousel might be regarded as a kind of continuous circle to broadcast the data files, e.g. via satellite. This means that no direct file access is available, rather it can happen as a worst case that a wait of a full round must be performed until a particular file is available (a similar procedure is used to load pages in the normal TV teletext).
- The set-top boxes may have only limited resources and memory. So not every file can be loaded into the cache (memory), which is a place to store something temporarily. Usually objects are stored for re-use in a place (e.g. memory) for faster access. Therefore, usually standard cache replacement strategies are implemented.
- The middleware may also cache some resources.

As in the normal TV teletext, the waiting times inherent to such a system, which cannot always be minimized by the currently implemented caching strategies, in particular in case of a limited memory and applications that tend to need more memory, provide a discomfort for a user.

In view of the above, it is the object underlying the present invention to provide an enhanced digital broadcast system, application, method to transmit application data files via a data carousel of a digital broadcast system, and method to receive application data files that are transmitted via a data carousel of a digital broadcast system according to which waiting times for different resources that are needed by an application are shortened.

This object is solved by a digital broadcast system according to independent claim 1, an application according to independent claim 4, a method to transmit application data files via a data carousel of a digital broadcast system according to independent claim 7, and a method to receive application data files that are transmitted via a data carousel of a digital broadcast system according to independent claim 13. Respective preferred embodiments thereof are respectively defined in the respective following sub-claims. A computer program product according to the present invention is defined in claim 15 and a computer readable storage means is defined in claim 16.

Therefore, a digital broadcast system in which application data files are transmitted via a data carousel according to the present invention comprises a merging unit that is arranged before the data carousel and that receives single application data files to merge two or more thereof to at least one respective combined application data file that is supplied to the data carousel for transmission instead the two or more single merged application data files included within one respective combined application data file.

Further, an application for a set-top box or another receiver for a digital broadcast system in which application data files are transmitted via a data carousel according to the present invention is adapted to request at least one combined application data file which includes two or more single application data files.

Still further, a method to transmit application data files via a data carousel of a digital broadcast system according to the present invention comprises the steps of merging two or more single application data files to at least one respective combined application data file, and supplying the at least one respective combined application data file to the data carousel for transmission instead the two or more single merged application data files included within said one respective combined application data file.

Still further, a method to receive application data files that are transmitted via a data carousel of a digital broadcast system according to the present invention comprises the step of requesting at least one combined application data file which includes two or more single application data files.

Therefore, according to the present invention less single application data files, i.e. resource files, are transmitted via the data carousel. This structure leads to a faster access also when applied together with generally used caching schemes, since it is more likely that a needed resource file is available in the middleware cache on the receiver side, i.e. within the set-top box. The higher likelihood results from the fact that the lower the total number of application data files within the middleware cache is and the higher the number of access requests to a particular file in the middleware cache is, the higher the availability of the particular file within this storage of the receiver side, e.g. the set-top box, is.

Therefore, according to the present invention the behaviour of the application is better predictable by bundling the resources to only a few combined application data files, since then the possibility is very high that the middleware stores the files in its local middleware cache, e.g. the MHP middleware stores the files in its local MHP middleware cache. Another effect is that the application itself can selectively load resources to its local memory, since the resources of this memory are not blocked by the files comprised in the file bundle stored in the middleware cache.

Under consideration of this concept and based on the analysis how data is transmitted from the broadcast system to the middleware, e.g. the MHP middleware, and how the different cache layers work, a framework might be designed that optimizes resource access in such a broadcast environment.

The digital broadcast system according to the present invention preferably further comprises a selection unit that is arranged before the data carousel and before the merging unit and that receives single application data files and determines which thereof should be merged for transmission in one or more combined application data file(s) and are therefore supplied to the merging unit and which thereof should be transmitted as single application data files and are therefore directly supplied to the data carousel. Such a selection can be automated based on the application data files needed by one application and/or different types of application data files. However, such a selection can also be based on an indication of a programmer of an application who might determine which application data files of one or more different applications should be combined to achieve a faster access of an application to its resources needed for the whole application or the execution of a particular task within the application. In other words, an indication of a combination of application data files that leads to an enhanced performance of an application in terms of reduced waiting times for the execution of the application or predetermined parts thereof. As a further alternative, the selection might also be based on a feedback given from one or more applications, e.g. the same application executed on different set-top boxes, so that an idle time of these applications that is due to waiting for certain resources is minimized.

Alternatively or additionally, in a digital broadcast system according to the present invention said merging unit compresses said single application data files during their combination to a combined application data file. Such a compression leads to reduced data in the data carousel and therefore either to higher data rates or to shorter cycle times, i.e. times until the same application data files is repeatedly transmitted.

The application according to the present invention is preferably adapted to directly access one or more of said single application data files by way of respective pointers respectively pointing to a beginning of a single application data file. This preferred embodiment secures that no additional measures have to be taken on the receiver side, i.e. currently used set-top boxes need no modifications, e.g. no special unit to reverse the combination of the single application data files to one combined application data file is necessary. The application that is executed on the set-top box, which is also transmitted to the set-top box via the data carousel, can directly access the single application data files that are transmitted within one combined application data file and stored as one combined application data file within the cache of the set-top box.

Alternatively or additionally, the application according to the present invention preferably decompresses said one or more single application data files during access in case said one or more of said single application data files are compressed within said combined application data file. In this case the same advantages are achieved as with the preceding preferred embodiment of the application according to the present invention.

The method to transmit application data files according to the present invention preferably further comprises the step of selecting single application data files that belong together to be combined to at least one respective combined application data file. Therewith, the advantages described in connection with the selection unit within the digital broadcast system according to the present invention are achieved, e.g. by the same measures as described above.

In the method to transmit application data files according to the present invention further preferably said single application data files that belong together to be combined to at least one respective combined application data file are needed by one application. Alternatively, said single application data files that belong together to be combined to at least one respective combined application data file might be needed by different applications that are executed on one set-top box, in particular at the same time.

In the method to transmit application data files according to the present invention alternatively or additionally further preferably said single application data files that are combined to one respective combined application data file are of the same resource type, in particular images or configuration files or fonts or content files. This leads to an improved resource management, e.g. for applications that need such an amount of resources that the combination to one single combined application data file is not feasible, e.g. due to resource problems within the set-top box or the data carousel.

Alternatively, in the method to transmit application data files according to the present invention alternatively or additionally further preferably said single application data files that are combined to one respective combined application data file are all resource files needed to execute an application or a defined part thereof, in particular images and/or configuration files and/or fonts and/or content files. In this case e.g. only one combined application data file gets transmitted and stored on the receiver side, which leads to a direct access of all needed resources that are included within this combined application data file.

The method to transmit application data files according to the present invention alternatively or additionally preferably further comprises the step of compressing said single application data files during their combination to a combined application data file to achieve the advantages as set-out above.

The method to receive application data files according to the present invention preferably further comprises the step of directly accessing one or more of said single application data files by way of respective pointers respectively pointing to a beginning of a single application data file to achieve the advantages as set-out above.

The method to receive application data files according to the present invention alternatively or additionally preferably further comprises the step of decompressing said one or more single application data files during access in case said one or more of said single application data files are compressed within said combined application data file to achieve the advantages as set-out above.

A computer program product according to the present invention comprises computer program means adapted to perform the method steps as set-out above when being executed on a computer, digital signal processor or the like. A computer readable storage means according to the present invention stores thereon a computer program product as set-out above.

Therewith, according to the present invention the implementation of a cache framework that can handle several compressed files containing the resources like images, configuration files, fonts, content files is proposed, wherein the cache might have the following features:
- Files are stored in the cache as binary array.
- Convenient methods for the application to access the files are provided.
- Standard cache replacement strategies might be implemented.
- An automatic recognition when resources in the compressed file are updated is allowed.

For a better understanding of the invention and to further elucidate the invention, its features, objects and advantages, exemplary preferred embodiments thereof are described in detail by way of example while making reference to the accompanying drawings, wherein:
- **Fig. 1**: shows the flow from the data carousel from a broadcaster to the MHP set-top box that executes the application that is displayed on the TV screen according to a preferred embodiment of the present invention,
- **Fig. 2**: shows a flow chart of the transmitting of application data files according to a preferred embodiment of the present invention,
- **Fig. 3**: shows a flow chart of the receiving of application data files according to a preferred embodiment of the present invention, and
- **Fig. 4**: shows the usual flow from the data carousel from a broadcaster to the MHP set-top box that executes the application that is displayed on the TV screen.

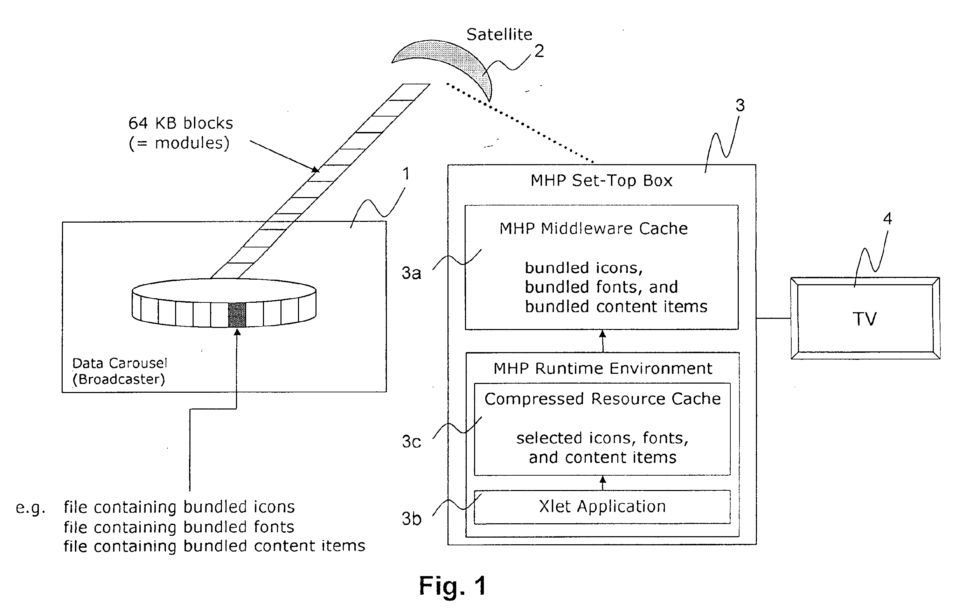

Figure 1 shows the flow of resources from the data carousel 1 of a broadcaster to the MHP set-top box 3 via a satellite 2 according to the present invention as a preferred exemplary embodiment of the present invention. The transmission itself is performed as in case of the usual flow shown in Fig. 4 and described above. Also in this case, the set-top box 3 caches the resources and executes the application that is displayed on the TV screen 4.

However, according to the present invention the resources are not transmitted as single application data files, e.g. files each containing one icon, files each containing one font, files each containing a content item, ..., but as combined application data files. In this preferred embodiment as one file containing all icons needed by the application, i.e. a file containing bundled single icon files, one file containing all fonts needed by the application, i.e. a file containing bundled single font files, and one file containing all content items needed by the application, i.e. a file containing bundled single content item files.

As indicated above, according to the present invention also all resources needed by the application might be transmitted as only one combined application data file. Also, a compression of the single application data files might be performed during their combination.

The three files with the bundled icons, bundled fonts, and bundled content items are stored in the MHP middleware cache 3a and therewith accessible to the application 3b. It is very likely that the middleware cache 3a will also keep these three files stored even when these resources are also requested by other tasks within the set-top box, e.g. other application data files of other applications have also to be cached or teletext pages have to be cached. This keeping of these files is due to the high request rate to these files by the application 3b, i.e. since the application 3b will often access these three combined application data files, namely the file containing bundled icons each time an arbitrary icon is needed by the application, the file containing bundled fonts each time an arbitrary font is needed by the application, and the file containing bundled content items each time an arbitrary content item is needed by the application. On the contrary, e.g. a single icon file cached according to the prior art will only be requested with a lower rate and therefore more likely be replaced in the middleware cache 3a.

The application 3b has also the possibility to store selected icons, fonts, content items, ..., in the resource cache 3c of the runtime environment. Such a storage is advisable for often needed files in case the middleware cache 3a is very limited so that not all bundled application data files might be permanently stored therein.

Of course, it is also possible that not all icons, fonts, content items, ..., that are needed by an application are respectively stored in one respective combined application data file, but just a part thereof. Also, the bundling might be performed according to other features than the type of resource data, e.g. depending on the time the respective resources are needed so that e.g. all resources needed for the display of one page are bundled.

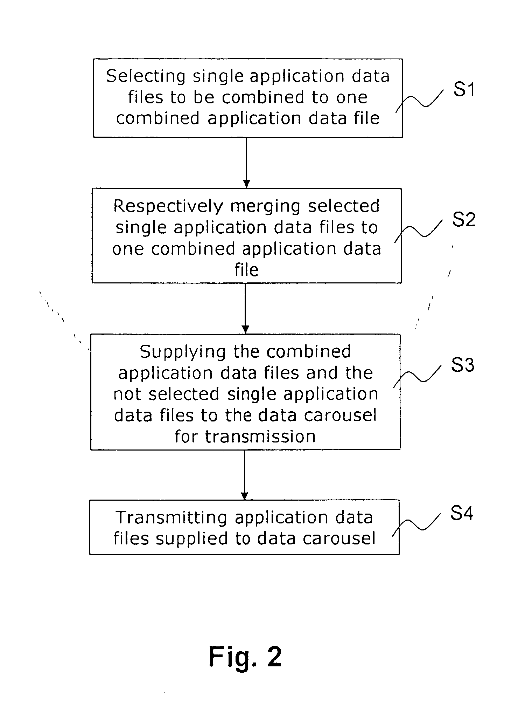

Fig. 2 shows the general scheme to transmit resources, i.e. application data files, according to the present invention. In a first step S1 single application data files that are respectively to be combined to one respective combined application data file are selected. As indicated above, this selection might be performed automated based on certain selection criteria, based on an input of a programmer of the application, or automated based on feedback given from the set-top box(es) executing the application, e.g. so as to minimize waiting time until resources can be accessed. In a following second step S2 the selected application data files are respectively merged to respective combined application data files, which are thereafter supplied to the data carousel for transmission together with the not selected single application data files, e.g. files that comprise the application itself, in a third step S3. Finally, in a fourth step S4, the application data files supplied to the data carousel are transmitted.

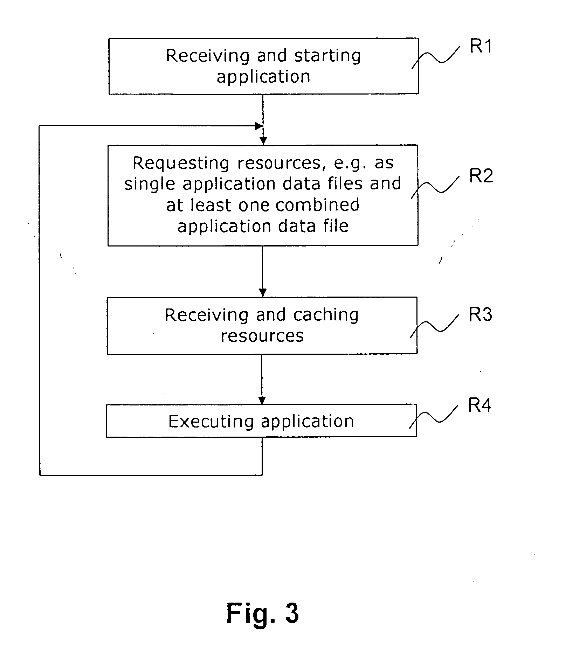

Fig. 3 shows the general scheme to receive resources, i.e. application data files, according to the present invention. In a first step R1 an application is received and started. Thereafter, in a second step R2, during the initialization of the application, and also eventually later during execution of the application, the needed resources are requested. In a following sixth step R3 the resources are received and cached, e.g. as single application data files and at least one combined application data file. Then, in a step R4, the application is executed. Depending on the application, these second to fourth steps R2 to R4 that are performed within the set-top box might be repeated for different resources during the execution. These steps have also to be repeated in case a particular resource is not stored in the cache anymore, e.g. due to the used caching strategies. However, since at least one combined application data file is used according to the present invention, the latter case is less likely to occur than in case of only transmitting single application data files. This effect is due to the fact that the combined application data file is very probably still cached by the MHP middleware.

## Claims

1. Digital broadcast system in which application data files are transmitted via a data carousel, **characterized by**
- a merging unit that is arranged before the data carousel and that receives single application data files to merge two or more thereof to at least one respective combined application data file that is supplied to the data carousel for transmission instead the two or more single merged application data files included within one respective combined application data file.

2. Digital broadcast system according to claim 1, **characterized by**
- a selection unit that is arranged before the data carousel and before the merging unit and that receives single application data files and determines which thereof should be merged for transmission in one or more combined application data file(s) and are therefore supplied to the merging unit and which thereof should be transmitted as single application data files and are therefore directly supplied to the data carousel.

3. Digital broadcast system according to claim 1 or 2, **characterized in that**
- said merging unit compresses said single application data files during their combination to a combined application data file.

4. Application for a set-top box or another receiver for a digital broadcast system in which application data files are transmitted via a data carousel, **characterized in that**
- it is adapted to request at least one combined application data file which includes two or more single application data files.

5. Application according to claim 4, **characterized in that**
- it is adapted to directly access one or more of said single application data files by way of respective pointers respectively pointing to a beginning of a single application data file.

6. Application according to claim 4 or 5, **characterized in that**
- it decompresses said one or more single application data files during access in case said one or more of said single application data files are compressed within said combined application data file.

7. Method to transmit application data files via a data carousel of a digital broadcast system, **characterized by** the steps of:
- merging two or more single application data files to at least one respective combined application data file, and
- supplying the at least one respective combined application data file to the data carousel for transmission instead the two or more single merged application data files included within said one respective combined application data file.

8. Method to transmit application data files according to claim 7, **characterized by** the step of:
- selecting single application data files that belong together to be combined to at least one respective combined application data file.

9. Method to transmit application data files according to claim 8, **characterized in that** said single application data files that belong together to be combined to at least one respective combined application data file are needed by one application.

10. Method to transmit application data files according to claim 8 or 9, **characterized in that** said single application data files that are combined to one respective combined application data file are of the same resource type, in particular images or configuration files or fonts or content files.

11. Method to transmit application data files according to claim 8 or 9, **characterized in that** said single application data files that are combined to one respective combined application data file are all resource files needed to execute an application or a defined part thereof, in particular images and/or configuration files and/or fonts and/or content files.

12. Method to transmit application data files according to anyone of claims 7 to 11, **characterized by** the step of:
- compressing said single application data files during their combination to a combined application data file.

13. Method to receive application data files that are transmitted via a data carousel of a digital broadcast system, **characterized by** the step of:
- requesting at least one combined application data file which includes two or more single application data files.

14. Method to receive application data files according to claim 13, **characterized by** the step of:
- directly accessing one or more of said single application data files by way of respective pointers respectively pointing to a beginning of a single application data file.

15. Method to receive application data files according to claim 13 or 14, **characterized by** the step of:
- decompressing said one or more single application data files during access in case said one or more of said single application data files are compressed within said combined application data file.

16. Computer program product, comprising computer program means adapted to perform the method steps as defined in anyone of claims 7 to 15 when being executed on a computer, digital signal processor or the like.

17. Computer readable storage means, storing thereon a computer program product according to claim 16.
